# EUROPÄISCHE PATENTSCHRIFT

(11) **EP 0 515 808 B1**
(45) Veröffentlichungstag und Bekanntmachung des Hinweises auf die Patenterteilung: **19.03.1997**
(21) Anmeldenummer: 92106164.4
(22) Anmeldetag: 09.04.1992
(51) Int. Cl.: B26F 1/12, B26F 3/00, B23K 26/08, B26D 7/01, B26D 7/06, B23Q 1/66, B23Q 7/00

(54) **Doppelband-Strahlverfahren**
Twin belt beam method
Méthode d'usinage utilisant le rayonnement pour bandes doubles

(30) Priorität: 23.05.1991 DE 4116875
(43) Veröffentlichungstag der Anmeldung: 02.12.1992
(73) Patentinhaber: Pinger, Egon, Dipl.-Ing., 6945 Origlio-Gianedo (Lugano) (CH)
(72) Erfinder: Pinger, Egon, Dipl.-Ing., 6945 Origlio-Gianedo (Lugano) (CH)
(74) Vertreter: Müller, Hans-Jürgen, Dipl.-Ing.

(56) Entgegenhaltungen:
- EP-A- 0 042 173
- US-A- 4 266 112

## Beschreibung

Die Erfindung bezieht sich auf ein Verfahren und eine Vorrichtung zum Schlitzen von Rändern von Bändern, die insbesondere bei der Preßrostfertigung verwendet werden und bevorzugt aus Bandstahl bestehen, gemäß den Oberbegriffen der Ansprüche 1 bzw. 7.

Es ist bereits ein solches Verfahren vorgeschlagen worden, bei dem die Bearbeitungseinrichtung ein Stanzwerkzeug aufweist, welches den betreffenden Schlitz mit seiner gesamten Randkontur zu einem bestimmten Zeitpunkt aus dem Band ausstanzt. Dabei ist es auch bekannt, die Bearbeitungseinrichtung mit einem oder mehreren in Bandlängsrichtung hintereinander angeordneten Stanzstempeln auszurüsten, so daß zu einer bestimmten Zeit gleich mehrere Schlitze ausgestanzt werden, daraufhin das Band um eine betreffende Strecke transportiert und danach der nächste unter dem Stanzwerkzeug befindliche und noch nicht mit Schlitzen versehene Abschnitt des Bandes geschlitzt wird. Das Ausstanzen insbesondere dicker Bandstähle über 1 mm Wandstärke ist jedoch mit sehr starken Geräuschen verbunden, die hohen Lärm verursachen und praktisch nur durch Schallabdichteinrichtungen auf einen für das Bedienungspersonal vertretbaren Lärmpegel vermindert werden können. Darüber hinaus verschleißen die Stanzwerkzeuge sehr rasch, so daß sie häufig ersetzt werden müssen, was größere Ausfallzeiten verursacht. Schließlich entstehen solche Ausfallzeiten auch dann, wenn von einer bestimmten Schlitzkonfiguration bzw. Randkontur auf eine andere umgestellt werden muß; zu diesem Zweck müssen erst neue Garnituren von Stanzstempeln bzw. Werkzeugen angefertigt und in der Bearbeitungseinrichtung in die betreffende Position gebracht werden.

Der Erfindung liegt die Aufgabe zugrunde, ein Verfahren und eine Vorrichtung dieser Gattung mit einfachen Mitteln dahingehend zu verbessern, daß der Lärmpegel ohne ausgesprochene Lärmabdichtkonstruktionen vermindert und mit weniger Ausfallzeiten beim Werkzeugwechsel kontinuierlicher gearbeitet werden kann.

Die Erfindung ist im Patentanspruch 1 gekennzeichnet und in Unteransprüchen sind weitere Ausbildungen derselben beansprucht.

Erfindungsgemäß wird anstelle des Stanzwerkzeugs ein hochenergetischer Strahl auf diejenigen Stellen des Bandes gerichtet, welche die Randkonturen des betreffenden Schlitzes bilden. Ein solcher Strahl, insbesondere Laser-Strahl, kann den Schlitz fast lautlos aus dem Band herausschneiden und bietet den Vorteil, gewissermaßen "trägheitslos" an jede beliebige Schlitzkonfiguration bzw. Randkontur von Schlitzen angepaßt zu werden, indem der hochenergetische Strahl in Bezug zum Band entsprechend fortbewegt wird. Für die Erzielung des gewünschten Zweckes ist es darüber hinaus wichtig, daß zwei Bänder parallel zueinander angeordnet sind und das eine Band in Bezug zum anderen so transportiert wird, daß der Strahl beim Verlassen des einen Bandes, wenn das Ende der Randkontur des betreffenden Schlitzes erreicht ist, auf das Nachbarband an der Stelle des Beginns der Randkontur des dort zu bildenden Schlitzes übertritt. Dadurch, daß der Strahl quer zur Längsrichtung vom soeben bearbeiteten Band auf das Nachbarband an derjenigen Stelle in Querrichtung übertritt, an welcher die Randkontur des Schlitzes des Nachbarbandes beginnt, geht praktisch keine Zeit und geht keine hochenergetische Energie verloren. Die Transporteinrichtungen für die beiden Bänder werden so gesteuert, daß das gerade mit einem Schlitz versehene erste Band dann in die nächste Bearbeitungsposition transportiert wird, wenn der Strahl seine Bearbeitung auf dem zweiten Band durchführt, wodurch die wechselweise Transportierung der beiden Bänder stattfindet. Es versteht sich, daß das vom Strahl gerade bearbeitete Band auch selbst in Transportrichtung oder nötigenfalls auch entgegengesetzt zu dieser (in einer Art Pilgerschrittverfahren) transportiert werden kann, wenn eine Relativbewegung des Strahls in Bezug zu diesem Band, d.h. eine Randkonturenkomponente in Längsrichtung des Bandes, notwendig ist. Beim erfindungsgemäßen Verfahren wird eine Art abwechselndes go-and-stop-Verfahren beider Bänder durchgeführt.

An sich ist es bereits bekannt (DE-OS 39 29 415), NC-gesteuerte Laserstrahlen zum Schlitzen von dünnen Stahlplatten zu verwenden, die zu Stanzzwecken Anwendung finden. Ziel dieser Maßnahme ist aber kein Herausschneiden von Formstücken aus den Platten.

Anstelle von oder zusätzlich zu hochenergetischen Laser-Strahlen können auch hochenergetische schmale Flüssigkeitsstrahlen Anwendung finden. Hierzu ist es zweckmäßig, unter hohem Druck von insbesondere über 1 kbar, zweckmäßigerweise über 3000 bar Druck aufweisende Wasserstrahlen zu verwenden, die aus mindestens einer kleinen Düse ausgestoßen werden.

Die Verbindung der Strahlbearbeitung mit der Doppelbandführung und einem Schritt-für-Schritt-Transportverfahren führt zur Lösung der oben genannten Aufgabe. Es kann vollautomatisch - sogar im Tag- und Nachbetrieb - ohne Stand- und Ausfallzeiten gearbeitet werden, ohne daß ein störender Lärmpegel beim Schlitzen auftritt, was zur Humanisierung der Arbeitswelt beiträgt. Darüber hinaus kann auch der Personalbedarf an teueren Werkzeugmachern gering gehalten werden, da keine Stanzwerkzeuge und teuere Stanzstempel verwendet werden. Die Konfiguration der Schlitze ist auf einfache Weise einstellbar, allein durch die Steuerung des Transports der beiden Bänder in deren Längsrichtung einerseits und der Relativposition des hochenergetischen Strahls auf das betreffende Band andererseits.

Das erfindungsgemäße Verfahren erlaubt auf einfache und schnelle, also kostensparende Weise das Ändern der sog. "Teilung", d.h. der Schlitzabstände. Bisher mußte hierfür, im Falle der Anwendung mehrerer Stanzstempel in einem einzigen Stanzwerkzeug, jeweils ein neues Stanzwerkzeug angefertigt werden, was neben hohen Kosten auch den Nachteil hatte, daß nicht schnell genug mit neuer Teilung produziert werden konnte.

Vorteilhaft läßt sich die Erfindung auch anwenden auf das Ablängen der Bänder vom Band durch den hochenergetischen Strahl. So kann z.B. der zum Formen der Schlitzkonturen dienende Laser-Strahl auch am Ende des betreffenden mit den Schlitzen versehenen Stabes (abgelängtes Band) quer über das gesamte Band geführt werden, wodurch der zuvor geschlitzte Bandteil (Stab) vom zulaufenden, noch ungeschlitzten Band abgetrennt wird. Die Steuerung des Transports des betreffenden Bandes in Bezug zum Laser-Strahl erfolgt dabei derart, daß der Abstand des letzten Schlitzes (bzw. des ersten nachfolgenden Schlitzes) vom Stabende (bzw. Anfang des nächsten Stabes) der gewünschten Endfeldlänge entspricht, was wiederum ein einfaches Ändern der Endfeldlänge für Spezialfälle ohne großes Umrüsten erlaubt.

Anhand der Zeichnung wird ein bevorzugtes Ausführungsbeispiel der Erfindung im folgenden näher beschrieben. Dabei zeigen:
- Fig. 1: eine Teilaufsicht auf ein Band, in dessen Schlitze teilweise Querstäbe eingepreßt sind;
- Fig. 2: ein vergrößerter Ausschnitt aus dem Schlitzbereich des Bandes von Fig. 1;
- Fig. 3: eine schematische Darstellung des erfindungsgemäßen Verfahrens unter Verwendung eines hochenergetischen Bearbeitungsstrahls zum Ausschneiden von Schlitzen zweier benachbarter Bänder;
- Fig. 4: eine schematische Draufsicht auf eine erfindungsgemäße Bearbeitungsvorrichtung und
- Fig. 5: eine schematische vergrößerte Aufsicht auf die Bearbeitungszonen eines hochenergetischen Strahls auf einem der beiden Bänder kurz nach dem Beenden des Bearbeitens des anderen Bandes.

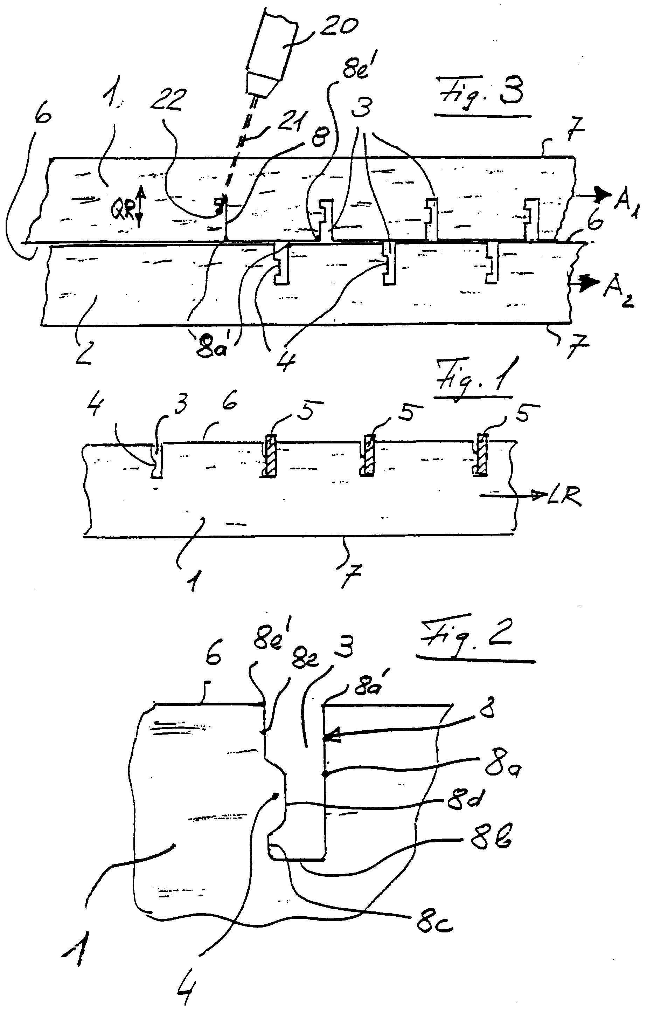

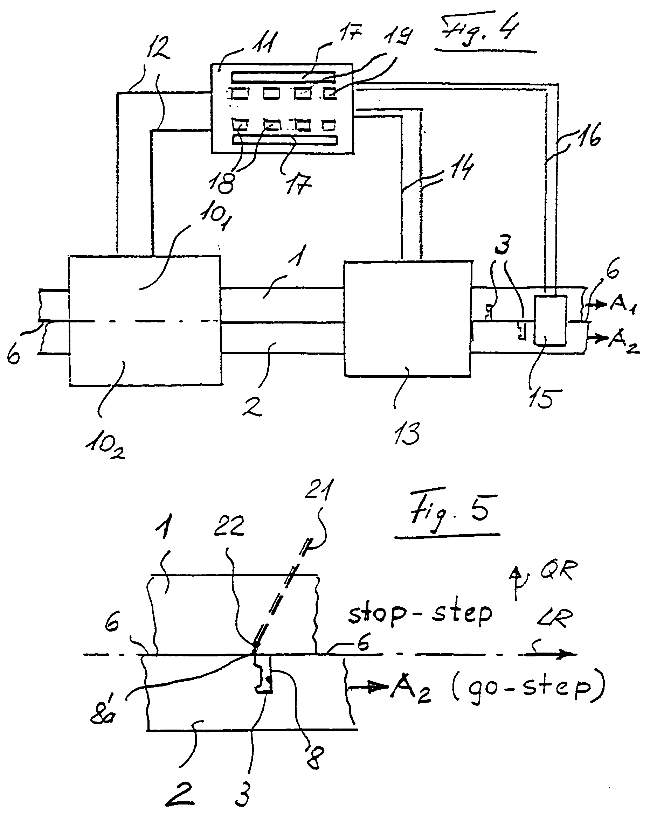

Nach Fig. 1 weist ein Band 1 aus beispielsweise Baustahl St37 oder aus V2A-Stahl in Längsrichtung LR hintereinander Schlitze 3 auf, welche sich nach dem oberen Rand 6 öffnen und an der nachlaufenden Seite einen den Schlitzquerschnitt verkleinernden Steg 4 aufweisen. In die drei rechten Schlitze 3 ist je ein rechteckförmiger Querstab 5 eingepreßt durch teilweises Verdrängen des Werkstoffs des Steges 4, welcher noch deutlicher aus der vergrößerten Ansicht in Fig. 2 ersichtlich ist. Der Schlitz 3 wird durch die Randkontur 8 gebildet, welche sich von einer Stelle 8a' am oberen Rand 6 des Bandes 1 bis zu einer Endstelle 8e' am gleichen oberen Rand 6 hinzieht; die Randkonturen mit den in Querrichtung QR verlaufenden Teilen 8a, 8c, 8d und 8e sowie dem in Längsrichtung LR verlaufenden Teil 8b und den Übergangsteilen zwischen den Teilen 8c, 8d und 8e, bei der Richtungskomponenten sowohl in Längsrichtung LR als auch in Querrichtung QR verlaufen, werden nach dem Stand der Technik durch Stanzstempel aus dem Band 1 ausgestanzt, deren Stanzquerschnitt alle die Randkonturenteile von 8a' bis 8e' aufweist.

Anstelle solcher Stanzstempel wird bei der Erfindung gemäß Fig. 3 ein hochenergetischer Strahl 21 angewendet, welcher bevorzugt ein Laser-Strahl ist, der beispielsweise von einem CO₂-Laser (oder auch Helium bzw. Stickstoff oder anderen Lasern) einer Leistung von beispielsweise 1,5 kW stammen kann. Hiermit lassen sich feinste Konturen in Baustahl mit gratfreien Schnitten herstellen. Obwohl auch Flüssigkeitsstrahlen mit Hochdruckwasser eines Drucks zwischen insbesondere 3 bis 4 kbar verwendet werden können, welche durch eine Düse eines Düsenquerschnitts von beispielsweise 0,2 bis 0,4 mm gepreßt werden, wird im folgenden Beispiel auf die Anwendung der Laser-Technik Bezug genommen.

Im Ausführungsbeispiel von Fig. 3 hat der Strahl 21 aus der Laser-Strahlquelle 20 einen Teil der Randkontur 8 vom Konturenbeginn 8a' bis zur Auftreffstelle 22 schon durchgeführt, um dann seine Bewegung in Querrichtung QR, d.h. rechtwinklig zur Längsrichtung LR des Bandes 1, bis zum Rand 6 desselben fortzusetzen (erst dann ist der Schlitz 3 vollständig ausgeformt). Dabei bewegt die Laser-Strahlenquelle 20 sich so, daß der Strahl 21 diese Bewegung in Querrichtung QR durchführt. Während dieser Querbewegung des Strahls 21 in Bezug zum betreffenden Band 1 (es kann entweder die Laser-Strahlenquelle 20 oder das Band 1 - oder auch beide - in Querrichtung QR bewegt werden) bleibt das Band 1 in Längsrichtung LR bzw. A1 still, während das benachbarte Band 2 in Längsrichtung, d. h. in Transportrichtung A₂, soweit voranbewegt wird, bis die Stelle des Konturenbeginns 8a' eines Schlitzes 3 mit dem Konturenende 8e' des zuvor bearbeiteten Schlitzes des Nachbarbandes 1 fluchtet. Hierdurch kann dann der kontinuierlich arbeitende Strahl 21 vom Konturenende 8e' des gerade ausgeformten Schlitzes 3 durch Weiterbewegen in Querrichtung QR sogleich mit dem Ausschneiden des nächsten Schlitzes 3 des Bandes 2 beginnen, das sich dann in Ruhestellung befindet, wie dies noch besser anhand der Fig. 5 gezeigt wird. Die Schlitzkontur mit den Teilen 8a-8e kann auch durch eine vorgegebene Kurve, z.B. einen entsprechend geformten Nocken, den ein Nockenfolger abfühlt, gesteuert werden; entsprechend werden Bandtransport und/oder Strahlbewegung gesteuert.

In Fig. 5 hat der Strahl 21 die Auftreffstelle 22 unmittelbar neben dem Konturenbeginn 8a des Bandes 1 erreicht. Zu diesem Zeitpunkt hat der Strahl 21 am Nachbarband 2 das vollständige Ausformen der Randkontur 8 des Schlitzes 3 beendet, so daß dieses Band 2 nun in Transportrichtung A2 in einem sogenannten "go-step" vorwärtsbewegt wird, während das Band 1, bei dem gerade ein Konturenteil 8a lediglich in Querrichtung QR ausgebrannt wird, in Ruhe verbleibt, was durch den "stop-step" angedeutet wird.

Das erfindungsgemäße Verfahren erlaubt das Schlitzen von Stahlbändern einer Dicke auch von mehreren Millimetern, beispielsweise von St37-Baustählen, Aluminium und VA-Edelstählen.

Gemäß Fig. 4 ist eine Bearbeitungsvorrichtung unter Anwendung der Erfindung wie folgt aufgebaut:

Eine Doppel-Transporteinrichtung bestehend aus der Transporteinrichtung 10₁ und 10₂, dient zum Transportieren der beiden parallel verlaufenden und mit den Rändern 6 aneinander gelegten Bändern 1, 2 im go-/stop-step-Verfahren der oben beschriebenen Art. Die Steuerung der beiden Transporteinrichtungen 10₁, 10₂ erfolgt durch die Steuereinrichtung 11, welche durch Steuerleitungen 12 mit den Transporteinrichtungen 10₁, 10₂ für die Bänder 1, 2 verbunden ist. Die Steuereinrichtung 11 ist zweckmäßigerweise mit Mikroprozessoren ausgerüstet, so daß durch numerische Tasten 19 und/oder durch FPS (freiprogrammierbare Steuerung) z.B. in Form von einsteckbaren Modulen ein bestimmtes Transportprogramm eingespeichert und durch die Anzeigeeinrichtung 17 angezeigt werden kann. In bestimmten Fällen kann es günstig sein, eines oder beide der Bänder 1, 2 ein Stück zurückzubewegen, z.B. nach Art des Pilgerschrittverfahren.

Im Abstand von den Transporteinrichtungen 10₁, 10₂ befindet sich die Bearbeitungseinrichtung 13, welche eine hier nicht sichtbare Laser-Strahlenquelle 20 an der Unterseite aufweist, während hier ebenfalls ein nicht sichtbarer Laser-Strahl 21 von oben nach unten je auf eines der beiden Bänder 1, 2 gelenkt ist. Wegen der Trägheitsarmut der Laser-Lichtquelle 20 bzw. einer entsprechenden Ablenkungsapparatur kann der Laser-Strahl 21 leicht in Querrichtung abgelenkt werden, was ebenfalls durch die Steuereinrichtung 11 erfolgen kann, die mittels der Steuerleitungen 14 mit der Bearbeitungseinrichtung 13 in Steuerabhängigkeit steht. Auch hier kann das Ablenkungsprogramm mittels der Eingabetasten 18 bzw. durch FPS in einen Mikroprozessor eingegeben werden. Auch Steuerungen mittels sog. "intelligenter Achsen" sind anwendbar.

Die Bänder 1, 2 verlassen nach der Ausbildung der Schlitze 3 die Position unter der Bearbeitungseinrichtung 13; ein Sensor 15, der über Fühlerleitungen 16 mit der Steuereinrichtung 11 in Verbindung steht, tastet die Stellung und Form der Schlitze 3 ab, um sie mit der Soll-Konfiguration der Schlitze, welche in die Steuereinrichtung 11 einprogrammiert ist, zu vergleichen. Bei evtl. Abweichung wird automatisch entweder in den Vorschub der Transporteinrichtungen 10₁ bzw. 10₂ oder in die Ablenkung des Strahls 21 in der Bearbeitungseinrichtung 13 oder in beide eingegriffen, so daß die Schlitzung stundenlang, ja selbst durchgehend tags und nachts ohne manuelle Bedienung kontinuierlich fortlaufen kann, bis Alarmgeräte einen echten Störungsfall anzeigen oder andere Schlitzkonfigurationen durch Umprogrammieren der Steuereinrichtung 11 geformt werden sollen. Falls die Rollen der zulaufenden Bänder 1, 2 zur Neige gehen sollten, empfiehlt es sich, das Ende einer Rolle an den Anfang einer neuen Rolle inbes. automatisch anzuschweißen.

## Patentansprüche

1. Verfahren zum Schlitzen von Rändern von Bändern insbesondere bei der Preßrost-Fertigung, bei der Bänder aus insbesondere Bandstahl in Längsrichtung schrittweise entlang einer Bearbeitungseinrichtung transportiert und der Bänderrand dort derart bearbeitet wird, daß Schlitze mit bestimmter Randkontur vom Bänderrand ausgehend und im Abstand voneinander entstehen, dadurch gekennzeichnet,
daß die Randkonturen (8) der Schlitze (6) durch mindestens einen schmalen hochenergetischen Strahl (21) aus den Bändern (1, 2) herausgeschnitten werden, daß jeweils 2 Bänder (1, 2) in Längsrichtung (LR) nebeneinander derart an der Bearbeitungseinrichtung entlanggeführt werden, daß sich die Auftreffstellen (22) des Strahls (21) auf den aufeinanderzugerichteten Randteilen der benachbarten Bänder (1, 2) befinden, und daß der Transport der Bänder (1, 2) in Bezug zueinander derart gesteuert wird, daß sich die Bänder (1, 2) in Bezug zum Strahl (21) nicht stets gemeinsam zur gleichen Zeit, sondern abwechselnd, d.h. zu unterschiedlichen Zeiten mit der Maßgabe in Längsrichtung (LR; A1, A2) bewegen, daß der Strahl (21) nach dem Schneiden der betreffenden Randkontur (8) des Schlitzes (3) eines Bands (2) beim Verlassen desselben vom Konturenende (8e') in Querrichtung (QR) auf das benachbarte Band (1) an der Stelle des Konturenbeginns (8a') des betreffenden nächsten auszuschneidenden Schlitzes (3) auftrifft.

2. Verfahren nach Anspruch 1, dadurch gekennzeichnet,
daß als hochenergetischer Strahl (21) ein Laser-Strahl verwendet wird.

3. Verfahren nach Anspruch 1, dadurch gekennzeichnet,
daß als hochenergetischer Strahl (21) ein unter hohem Druck von mehr als 1 kbar aus mindestens einer kleinen Düse ausgestoßener Flüssigkeitsstrahl verwendet wird.

4. Verfahren nach einem der vorhergehenden Ansprüche, dadurch gekennzeichnet,
daß das mittels des Strahls (21) gerade bearbeitete Band (1) nur in den Zeiträumen in Längsrichtung (A1) transportiert wird, wenn der Strahl (21) dort einen Bearbeitungsvorgang durchführt, der eine sich in Längsrichtung (LR) verlaufende Konturenkomponente (8b) aufweist.

5. Verfahren nach einem der vorhergehenden Ansprüche, dadurch gekennzeichnet,
daß das gerade nicht bearbeitete Band (2) in Längsrichtung (A2) bis zur nächsten mit einem Schlitz (3) zu versehenden Stelle transportiert wird.

6. Verfahren nach einem der vorhergehenden Ansprüche, dadurch gekennzeichnet,
daß der hochenergetische Strahl (21) nur in Querrichtung (QR) über mindestens einen Teil jedes Bandes (1, 2) hin- und herbewegt wird.

7. Vorrichtung zur Durchführung des Verfahrens nach einem oder mehreren der vorhergehenden Ansprüche mit einer Bearbeitungseinrichtung für die Schlitzformung und mit einer Transporteinrichtung für das Band, dadurch gekennzeichnet,
daß durch die Bearbeitungseinrichtung (13) mindestens ein hochenergetischer Strahl (21) erzeugbar und auf das zu bearbeitende Band (1, 2) richtbar ist und daß je eine Transporteinrichtung (10₁, 10₂) für die parallel nebeneinander angeordneten Bänder (1, 2) vorgesehen und mittels einer Steuereinrichtung steuerbar ist, welche gleichzeitig zur Steuerung der Bearbeitungseinrichtung (13) dient.

8. Vorrichtung nach Anspruch 7, dadurch gekennzeichnet,
daß der Bearbeitungseinrichtung (13) in Längsrichtung (LR) der Bänder (1, 2) mindestens ein Sensor (15) nachgeschaltet ist, der die Ausbildung der Randkonturen (8) der Schlitze (3) abfühlt und mit einer Anzeigeeinrichtung (17) und/oder der Steuereinrichtung (11) verbunden ist.

## Claims

1. A method for slotting edges of belts in the manufacture of pressed grates in particular, wherein belts made of strip steel, in particular, are advanced in the longitudial direction step by step along a working means and the belt edge is worked in such manner that slots are created to have a specific edge contour, starting out from the belt edge and being spaced apart from each other, characterised in that the edge contours (8) of the slots (6) are cut out from the belts (1, 2) by at least one narrow high-energy beam (21), that two adjacent belts (1, 2) are respectively guided in the longitudinal direction (LR) past the working means in such manner that the impact locations (22) of the beam (21) are situated on the edge portions of the adjacent belts (1, 2) being directed towards each other, and that the transport of the belts (1, 2) relative to each other is controlled such that the belts (1, 2) are not always moved simultaneously, but alternately, i.e. at different times, in the longitudinal direction (LR; A1, A2) with the proviso that the beam (21) impinges, after having cut the respective edge contour (8) of the slot (3) of a belt (2) and after having left the belt from the contour end (8e'), in the transverse direction (QR) upon the starting location of the contour (8a') of the respectively next slot (3) to be cut out at the adjacent belt (1).

2. A method according to claim 1, characterised in that a laser beam is used as the high-energy beam (21).

3. A method according to claim 1, characterised in that a liquid beam being ejected from at least one small nozzle under a high pressure of more than 1 kbar is used as the high-energy beam (21).

4. A method according to any of the preceding claims, characterised in that the belt (1) just being worked by means of the beam (21) is advanced in the longitudinal direction (A1) during those periods only when the beam (21) carries out a working process comprising a contour component (8b) running in the longitudinal direction (LR).

5. A method according to any of the preceding claims, characterised in that the belt (2), which is not being worked, is advanced in the longitudinal direction (A2) to the next location to be provided with a slot (3).

6. A method according to any of the preceding claims, that the high-energy beam (21) is moved reciprocatingly over at least one portion of each belt (1, 2) in the transverse direction only.

7. An apparatus for carrying out the method according to one or several of the preceding claims, comprising a working means for the formation of slots and an advance means for the belt, characterised in that at least one high-energy beam (21) may be generated and directed towards the belt (1, 2) to be worked by the working means (13), and that one advance means (10₁, 10₂) is provided for each of the belts (1, 2) being disposed adjacent to each other in parallel and may be controlled by means of a control means simultaneously serving to control the working means (13).

8. An apparatus according to claim 7, characterised in that at least one sensor (15) is connected downstream of the working means (13) in the longitudinal direction (LR) of the belts (1, 2), which sensor senses the formation of the edge contours (8) of the slots (3) and is connected with a display means (17) and/or the control means (11).

## Revendications

1. Procédé à fendre les bords de bandes, notamment pour la fabrication de grilles (caillebotis), dans laquelle les bandes, en particulier en acier feuillard, sont convoyées, pas à pas, en sens longitudinal le long d'un dispositif d'usinage et les bord des bandes sont y usinés de façon à former des fentes à un profil de bord défini à partir du bord des bandes, lesquelles fentes sont écartées l'une de l'autre, **caractérisé** en ce que les profils de bord (8) desdites fentes (6) sont coupés dans lesdites bandes (1, 2) moyennant au moins un faisceau étroit à haute énergie (21); en ce que 2 bandes (1, 2) à la fois sont amenées, l'une à côté de l'autre en sens longitudinal (LR), le long dudit dispositif d'usinage de façon que les endroits d'incidence (22) dudit faisceau (21) se trouvent sur les parties de bord, dirigées l'une vers l'autre, des bandes voisines (1, 2); et en ce que le transfert desdites bandes (1, 2) l'une relativement à l'autre est commandé de façon que lesdites bandes (1, 2) ne se déplacent pas toujours ensemble à la fois, mais tour à tour, c'est à dire aux moments différents, en sens longitudinal (LR; A1, A2), au fur et à mesure de l'incidence dudit faisceau (21) sur la bande voisine (1) à l'endroit où le profil (8a') de la prochaine fente respective (3) à couper, après la coupure du profil de bord respectif (8) de ladite fente (3) d'une bande (2), quand il quitte cette bande, à partir du bout (8e') dudit profil en sens transversal (QR).

2. Procédé selon la revendication 1, caractérisé en ce qu'un faisceau laser est utilisé à titre de faisceau (21) à haute énergie.

3. Procédé selon la revendication 1, caractérisé en ce qu'un jet de liquide est utilisé à titre de faisceau (21) à haute énergie, qui est rejeté par au moins une petite tuyère à une haute pression au dessus de 1 kbar.

4. Procédé selon une quelconque des revendications précédentes, caractérisé en ce
que la bande (1) en train d'être usinée moyennant ledit faisceau (21) n'est amenée en sens longitudinal (A1) que dans les intervalles où le faisceau (21) réalise là un processus d'usinage, qui comprend une composante de profil (8b) qui s'étend en sens longitudinal (LR).

5. Procédé selon une quelconque des revendications précédentes, caractérisé en ce
que la bande (2) qui n'est pas en train d'être usinée est amenée en sens longitudinal (A2) jusqu'au prochain endroit à munir d'une fente (3).

6. Procédé selon une quelconque des revendications précédentes, caractérisé en ce
que ledit faisceau (21) à haute énergie n'est déplacé de façon va-et-vient qu'en sens transversal (QR) sur au moins une partie de chaque bande (1, 2).

7. Dispositif à réaliser le procédé selon une quelconque ou plusieurs des revendications précédentes, comprenant un moyen d'usinage à former la fente et un moyen de transfert de la bande, caractérisé en ce que ledit moyen d'usinage (13) est capable d'engendre au moins un faisceau (21) à haute énergie et de le diriger sur la bande (1, 2) à usiner, et en ce que un moyen de transfert (10₁, 10₂) respectif est pourvu pour chacune desdites bandes (1, 2) disposées l'une en parallèle à côté de l'autre, qui est commandable par un moyen de réglage qui sert, en même temps, à commander ledit moyen d'usinage (13).

8. Dispositif selon la revendication 7, caractérisé en ce qu'au moins un détecteur (15) est intercalé en arrière dudit moyen d'usinage (13) en sens longitudinal (LR) desdites bandes (1, 2), qui détecte la formation des profils de bord (8) desdites fentes (3) et qui est relié à un moyen indicateur (17) et/ou audit moyen de réglage (11).
